# EUROPÄISCHE PATENTSCHRIFT

(11) **EP 3 487 647 B1**
(45) Veröffentlichungstag und Bekanntmachung des Hinweises auf die Patenterteilung: **22.04.2020**
(21) Anmeldenummer: 17748416.9
(22) Anmeldetag: 18.07.2017
(51) Int. Cl.: B21K 7/06, B23D 23/00, B23D 33/10

(54) **VERFAHREN UND VORRICHTUNG ZUM ABSCHEREN VON STANGENMATERIAL**
PROCESS AND DEVICE TO SHEAR A BAR MATERIAL
PROCEDE ET DISPOSITIF POUR CISSAILLER LE MATERIAU D'UNE BARRE

(30) Priorität: 19.07.2016 CH 9232016
(43) Veröffentlichungstag der Anmeldung: 29.05.2019
(73) Patentinhaber: Hatebur Umformmaschinen AG, 4153 Reinach (CH)
(72) Erfinder: VULCAN, Mihai, 4114 Hofstetten (CH)
(74) Vertreter: Bohest AG
(86) Internationale Anmeldenummer: PCT/EP2017/068095
(87) Internationale Veröffentlichungsnummer: WO 2018/015370

(56) Entgegenhaltungen:
- EP-A2- 0 196 466
- CH-A5- 602 291
- US-A- 2 446 146

## Beschreibung

Die Erfindung betrifft ein Verfahren zum Abscheren eines Endabschnitts von einem Stangenmaterial gemäss dem Oberbegriff des unabhängigen Anspruchs 1 sowie eine Vorrichtung zur Durchführung des Verfahrens gemäss dem Oberbegriff des unabhängigen Anspruchs 9. Ein solches Verfahren und eine solche Vorrichtung sind aus dem Dokument EP0196466 A2 bekannt.

Abscherverfahren und entsprechende Vorrichtungen der gattungsgemässen Art sind allgemein, beispielsweise aus der CH 702 984 B1, bekannt und werden zum Beispiel bei der Erzeugung von Formteilen aus metallischen Werkstoffen eingesetzt. Bei solchen Verfahren wird üblicherweise ein metallisches Stangenmaterial zwischen ein örtlich fixiertes Festmesser und ein relativ zu diesem bewegliches Abschnittmesser eingeführt, wobei ein abzuscherender Endabschnitt des Stangenmaterials in Längsrichtung über die durch das Festmesser und das Abschnittmesser definierte Scherebene hinausragt. Das Abschnittmesser wird dann quer zum Stangenmaterial gegen das Festmesser geführt und dabei der Endabschnitt vom Stangenmaterial abgeschert.

Unter "Stangenmaterial" wird im vorliegenden Zusammenhang jede Materialform mit ausgeprägter Längserstreckung und beliebigem, über die Längserstreckung konstantem Querschnitt verstanden. Insbesondere fallen metallische Stäbe, Stangen und Drähte jeglicher Abmessungen unter diese Definition. Kreisrunde Querschnitte sind die Regel, die Erfindung ist aber nicht darauf beschränkt. Die Bezeichnung "stangenförmig" ist analog zu verstehen. Unter "Endabschnitt" wird sowohl ein unbearbeiteter als auch ein bearbeiteter, zum Beispiel umgeformter Abschnitt am Ende des Stangenmaterials verstanden.

Durch das Scheren treten am abgescherten Abschnitt bzw. an der Reststange Verformungen auf. Dies ist der sogenannte Einzug. Seine Grösse ist vom Formänderungsvermögen des Werkstoffs, aus welchem das Stangenmaterial besteht, bestimmt. Das Formänderungsvermögen eines Stahlwerkstoffs hängt u.a. von der Temperatur und vom Spannungszustand ab. Je höher die Temperatur bzw. der Druckspannungszustand, desto grösser ist auch das Formänderungsvermögen. Umformtechnisch gesehen findet sowohl beim Kalt- als auch beim Warmscheren ein Werkstofffliessen statt.

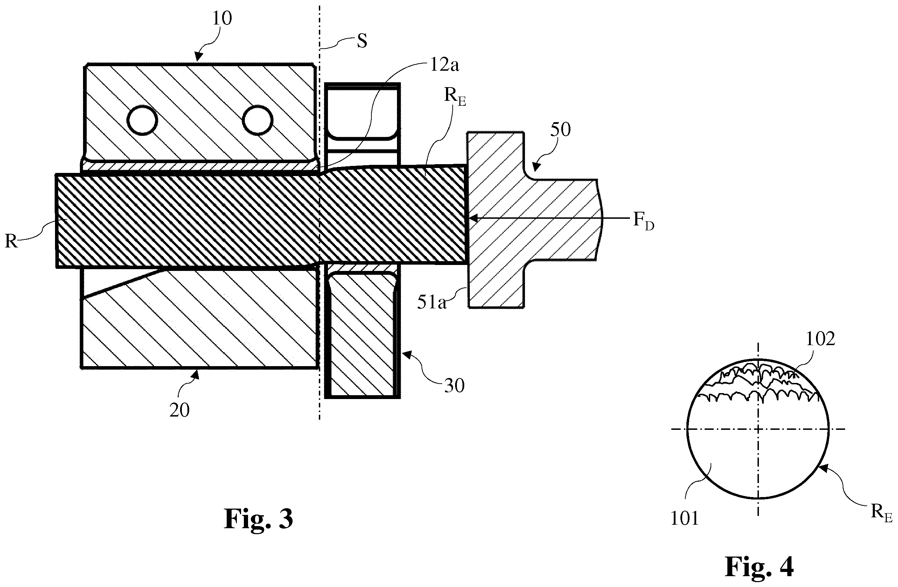

Die Scherfläche am abgescherten Abschnitt setzt sich beim Scheren von Stangen meist aus mehreren Teilen zusammen. Sie besteht zum einen aus einer glatten und ebenen, sogenannten Anschnittfläche mit geringer Rauhtiefe und zum anderen aus einer Bruchfläche mit Bereichen unterschiedlicher Rauhtiefen (Fig. 4). Die rauhe, brüchige (Bruch-)Fläche, die auch als Ausbruch bezeichnet wird, entsteht, wenn das Formänderungsvermögen des Werkstoffs erschöpft ist. Die Qualität der Scherfläche im Fall eines gegebenen Werkstoffs ist vom Spannungszustand und der Temperatur der Trennzone während des Schervorgangs bestimmt.

Die durch die plastische Deformation aufgrund des höheren Formänderungsvermögens hervorgerufene Einzugsbildung führt zum Verdrängen des Werkstoffs aus der Scherzone zwischen den beiden Messern (in der Regel ein Festmesser und ein bewegliches Messer). Insbesondere beim Warmscheren wird die Stange üblicherweise auf einem Längsanschlag abgestützt um zu verhindern, dass die Scherflächen sich schräg zueinander bilden. Durch das Verdrängen des Werkstoffs aus der Scherzone entsteht aufgrund des Längsanschlags eine Reaktionskraft, die zu einer Erhöhung der Druckspannung in der Scher- bzw. Trennzone führt. Dieser Spannungszustand ist umso grösser, je kleiner das Messerspiel ist. Eine geschlossene Form insbesondere des beweglichen Abschnittmessers ist daher vorteilhafter als eine offene Form (Halbschale).

Bei bekannten Schervorrichtungen erfüllt der Längsanschlag beim Warmscheren zwei Funktionen: Einerseits bestimmt er die Abschnittlänge, die gegebenenfalls auch bei laufender Maschine eingestellt werden kann, um z.B. eine Volumenkompensation aufgrund des Werkzeugverschleisses zu realisieren. Anderseits "erkennt" er die Abschnittlänge mittels eines Kraftsensors, der ein entsprechendes Signal an die Maschinensteuerung liefert zur Weiterverarbeitung in der Umformmaschine bzw. zur Ausscheidung, falls dieses Signal eine unzureichende Stärke hat bzw. inexistent ist ("Abschnitt zu kurz").

Bei der z.B. aus der CH 702 984 B1 bekannten Schervorrichtung erfolgt die Beaufschlagung des abzuscherenden Endabschnitts des Stangenmaterials mit einer Druckkraft kraftgeregelt. Das heisst, dass die Druckkraft, die der Anschlag auf den Endabschnitt ausübt, mittels eines hydraulischen Regelsystems so eingestellt wird, dass sie über den Scherhub einem vorgegebenen zeitlichen Kraftverlauf (Kraft-Führungsgrösse) folgt. Typische Beispiele für einen solchen zeitlichen Kraftverlauf sind eine konstante Kraft über den grössten Teil des Scherhubs (Rechteck-Verlauf) oder rascher Anstieg und langsamerer Abfall der Kraft über den Scherhub (Dreieck-Verlauf).

Zur Erzielung einer hohen Scherqualität der Trennflächen am Endabschnitt ist die auf den Endabschnitt ausgeübte Druckkraft bei diesen bekannten, mit kraftgeregelter Druckbeaufschlagung arbeitenden Schervorrichtungen in der Regel verhältnismässig gross. Dies stellt hohe konstruktive Anforderungen an die Schervorrichtung und führt zu vermehrtem Verschleiss der mechanischen Komponenten der Schervorrichtung, insbesondere des Antriebs des Längsanschlags. Ausserdem besteht die Gefahr, dass der abzuscherende Endabschnitt durch die hohe Druckbeaufschlagung in Längsrichtung gestaucht wird.

Der Erfindung liegt daher die Aufgabe zugrunde, ein Verfahren und eine Vorrichtung der eingangs erwähnten Art dahingehend zu verbessern, dass möglichst mit geringeren auf den Endabschnitt ausgeübten Druckkräften ausgekommen werden kann, ohne dass Einbussen hinsichtlich der Scherqualität in Kauf genommen werden müssen.

Diese Aufgabe wird durch das erfindungsgemässe Verfahren und die erfindungsgemässe Vorrichtung gelöst, wie sie im unabhängigen Anspruch 1 bzw. unabhängigen Anspruch 9 definiert sind. Besonders vorteilhafte Weiterbildungen und Ausgestaltungen der Erfindung ergeben sich aus den jeweils abhängigen Ansprüchen.

Hinsichtlich des Verfahrens besteht das Wesen der Erfindung in Folgendem: Bei einem Verfahren zum Abscheren eines Endabschnitts von einem Stangenmaterial mittels eines gegen ein Festmesser quer zur Längsrichtung des Stangenmaterials beweglichen Abschnittmessers wird der abzuscherende Endabschnitt stirnseitig in Anlage mit einem Längsanschlag gebracht und während des Schervorgangs über den Längsanschlag mit einer Druckkraft in Längsrichtung des Stangenmaterials beaufschlagt. Die Beaufschlagung des Endabschnitts mit der Druckkraft während des Schervorgangs erfolgt mit lagegeregelter Längsposition des Längsanschlags.

Vorzugsweise wird dabei die Längsposition des Längsanschlags während des Schervorgangs auf einen konstanten Wert geregelt.

Durch die lagegeregelte Beaufschlagung des Endabschnitts mit Druckkraft kann mit einer geringeren Druckkraft als bei herkömmlicher kraftgeregelter Beaufschlagung ausgekommen werden, ohne dass die Scherqualität der Trennflächen am Endabschnitt verschlechtert wird. Dadurch wird die mechanische Beanspruchung und der Verschleiss der Schervorrichtung reduziert.

Vorteilhafterweise wird der Verlauf der vom Längsanschlag während des Schervorgangs auf den Endabschnitt ausgeübten Druckkraft gemessen. Dies erlaubt eine Qualitätsbeurteilung der Scherfläche. Dementsprechend wird gemäss einer vorteilhaften Ausführungsform des Verfahrens der Verlauf der gemessenen Druckkraft zur Beurteilung der Qualität der Scherfläche des Endabschnitts ausgewertet. Unter Verlauf der Druckkraft während des Schervorgangs ist der zeitliche Verlauf und/oder der Verlauf über den Scherweg zu verstehen.

Gemäss einer vorteilhaften Ausführungsform des Verfahrens wird bei - vorzugsweise anhand des Verlaufs der gemessenen Druckkraft festgestellter - ungenügender Qualität der Scherfläche des Endabschnitts auf eine Betriebsart gewechselt, bei welcher die Beaufschlagung des abzuscherenden Endabschnitts mit der Druckkraft kraftgeregelt erfolgt, wobei die vom Längsanschlag auf den abzuscherenden Endabschnitt ausgeübte Druckkraft nach Massgabe einer vorgegebenen Kraft-Führungsgrösse geregelt wird. Auf diese Weise können auch Endabschnitte abgeschert werden, bei denen die lagegeregelte Druckbeaufschlagung nicht zur gewünschten Scherqualität führt.

Zweckmässigerweise wird die Qualität der Scherfläche als ungenügend beurteilt, wenn der Verlauf der gemessenen Druckkraft vor dem Ende des Schervorgangs eine Delle aufweist, wobei der Verlauf der Druckkraft unter Nichtberücksichtigung regeltechnischer Schwankungen auf ein Minimum sinkt und dann wieder ansteigt.

Insbesondere wird die Qualität der Scherfläche als ungenügend beurteilt, wenn der Verlauf der gemessenen Druckkraft vom Minimum um eine Differenz ansteigt, welche mindestens 10%, vorzugsweise 15% - 30%, des Maximalwerts der gemessenen Druckkraft beträgt.

Das Absinken und anschliessende Wiederansteigen des Verlaufs der gemessenen Druckkraft ist ein Indikator für einen Ausbruch.

Weiters kann die Qualität der Scherfläche auch als ungenügend beurteilt werden, wenn der Verlauf der gemessenen Druckkraft vor dem Ende des Schervorgangs auf einen Wert gleich oder kleiner null sinkt.

Eine zur Durchführung des erfindungsgemässen Verfahrens zum Abscheren eines Endabschnitts von einem Stangenmaterial geeignete Vorrichtung umfasst ein Festmesser, ein quer zur Längsrichtung des Stangenmaterials gegen das Festmesser beweglich angetriebenes Abschnittmesser, einen in Längsrichtung bewegbaren Längsanschlag für den abzuscherenden Endabschnitt des Stangenmaterials und eine Hydraulikanordnung, um den Längsanschlag zu bewegen und den Endabschnitt während des Schervorgangs über den Längsanschlag mit einer Druckkraft in Längsrichtung des Stangenmaterials zu beaufschlagen. Die Vorrichtung weist eine Positionsmessanordnung zur Erfassung der Längsposition des Längsanschlags und einen Regler auf, der zur Steuerung der Hydraulikanordnung aufgrund der von der Positionsmessanordnung erfassten Längsposition des Längsanschlags ausgebildet ist, wobei die Längsposition des Längsanschlags durch den Regler über die von ihm gesteuerte Hydraulikanordnung nach Massgabe einer vorgegebenen Positions-Führungsgrösse regelbar ist.

Die Positionsmessanordnung, der Regler und die Hydraulikanordnung ermöglichen zusammen die Beaufschlagung des Endabschnitts mit der Druckkraft mit lagegeregelter Längsposition des Längsanschlags sowie die lagegeregelte Bewegung des Längsanschlags vor und nach dem eigentlichen Schervorgang.

Vorteilhafterweise ist der Regler dazu ausgebildet, die Längsposition des Längsanschlags während des Schervorgangs auf einen konstanten Wert zu regeln.

Zweckmässigerweise umfasst die Hydraulikanordnung ein vom Regler kontinuierlich einstellbares Servoventil. Mit einem solchen Servoventil ist eine besonders präzise und rasche Regelung möglich.

Vorteilhafterweise umfasst die Vorrichtung eine Messanordnung zur Messung der vom Längsanschlag auf den abzuscherenden Endabschnitt ausgeübten Druckkraft. Dadurch ist einerseits eine Kontrolle der auftretenden Druckkraft möglich und anderseits kann die gemessene Druckkraft für weitere Zwecke, insbesondere für die Beurteilung der erreichten Scherqualität, herangezogen werden.

Zweckmässigerweise umfasst die Vorrichtung einen mit dem Längsanschlag kinematisch verbundenen, von der Hydraulikanordnung durch Beaufschlagung mit einem hydraulischen Druckmedium antreibbaren Anschlagkolben und weist die Messanordnung Drucksensoren zur Erfassung der Drücke des hydraulischen Druckmediums auf beiden Seiten des Anschlagkolbens auf. Auf diese Weise kann der zeitliche Verlauf der am Längsanschlag wirkenden Druckkraft einfach erfasst werden.

Gemäss einer vorteilhaften Ausführungsform ist der Regler dazu ausgebildet, dass mit ihm die vom Längsanschlag auf den abzuscherenden Endabschnitt ausgeübte Druckkraft über die Hydraulikanordnung nach Massgabe einer vorgegebenen Kraft-Führungsgrösse regelbar ist. Dadurch kann die Beaufschlagung des Endabschnitts mit Druckkraft auch kraftgeregelt erfolgen, was im Allgemeinen insbesondere dann sinnvoll ist, wenn die lagegeregelte Druckbeaufschlagung nicht zur gewünschten Scherqualität führt.

Vorteilhafterweise ist die Vorrichtung dabei zwischen zwei Betriebsarten umschaltbar ausgebildet, wobei die Druckkraftbeaufschlagung des abzuscherenden Endabschnitts in der einen Betriebsart mit lagegeregelter Längsposition des Längsanschlags und in der anderen Betriebsart kraftgeregelt erfolgt. Dadurch kann die Vorrichtung universeller eingesetzt werden.

Im Folgenden werden das erfindungsgemässe Verfahren und die erfindungsgemässe Vorrichtung unter Bezugnahme auf die beigefügten Zeichnungen anhand von Ausführungsbeispielen detaillierter beschrieben. Es zeigen:
- Fig. 1 -: eine perspektivische Gesamtansicht eines Ausführungsbeispiels der erfindungsgemässen Vorrichtung;
- Fig. 2 -: einen Längsschnitt durch die wesentlichsten Teile der Vorrichtung gemäss Fig. 1;
- Fig. 3 -: eine vergrösserte Darstellung eines Teils der Vorrichtung von Fig. 2 während des Schervorgangs,
- Fig. 4 -: eine vergrösserte Aufsicht auf eine Scherfläche;
- Fig. 5-8 -: je ein Schema verschiedener Varianten der Vorrichtung und
- Fig. 9-12 -: verschiedene Diagramme zur Erläuterung des Verlaufs typischer Grössen des erfindungsgemässen Verfahrens während des Schervorgangs.

Für die nachstehende Beschreibung gilt die folgende Festlegung: Sind in einer Figur zum Zweck zeichnerischer Eindeutigkeit Bezugszeichen angegeben, aber im unmittelbar zugehörigen Beschreibungsteil nicht erwähnt, so wird auf deren Erläuterung in vorangehenden oder nachfolgenden Beschreibungsteilen verwiesen. Umgekehrt sind zur Vermeidung zeichnerischer Überladung für das unmittelbare Verständnis weniger relevante Bezugszeichen nicht in allen Figuren eingetragen. Hierzu wird auf die jeweils übrigen Figuren verwiesen.

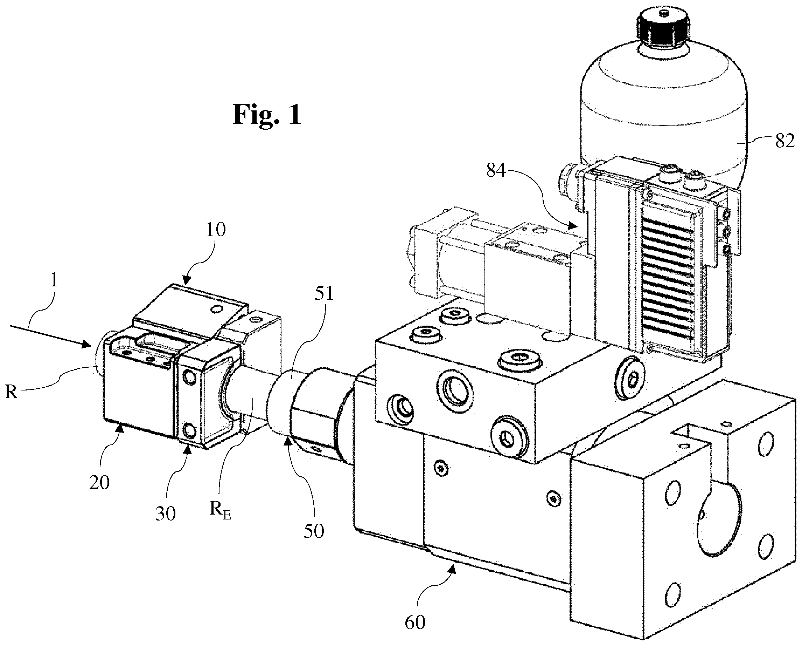

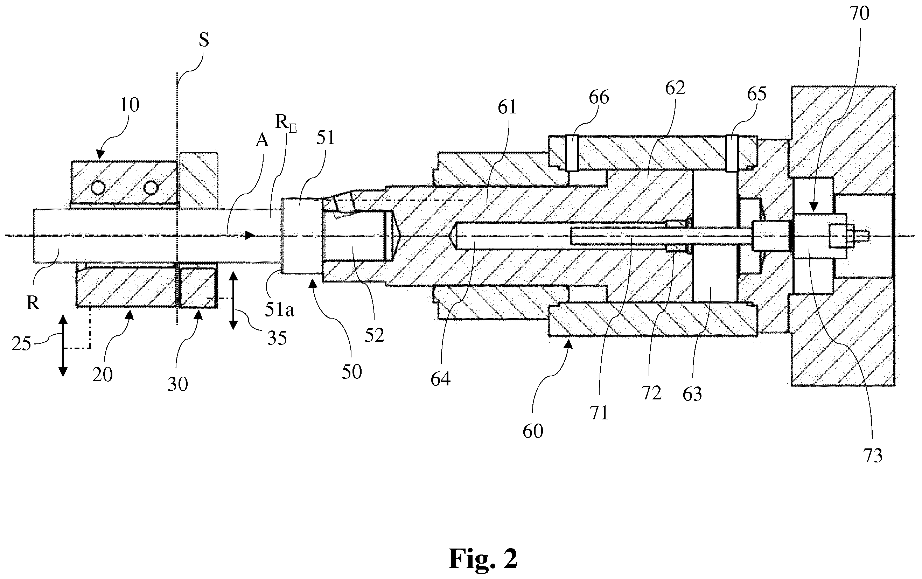

Die in den Figuren 1-3 dargestellte Vorrichtung umfasst im Wesentlichen ein örtlich fixiertes Festmesser 10, eine Klemmvorrichtung 20, ein beweglich angetriebenes Abschnittmesser 30 und einen Längsanschlag 50. Das Festmesser 10 ist im Querschnitt etwa halbkreisförmig ausgebildet, ebenso die Klemmvorrichtung 20. Das Festmesser 10 und die Klemmvorrichtung 20 bilden zwischen sich einen Kanal, durch welchen ein metallisches Stangenmaterial R in Längsrichtung A (Fig. 2) soweit ein- und durchgeführt wird, bis das vordere Ende des Stangenmaterials R mit seiner Stirnseite in Anlage mit dem Längsanschlag 50 kommt.

Das Festmesser 10 und das bewegliche Abschnittmesser 30 sind in Längsrichtung geringfügig versetzt angeordnet und legen zwischen sich eine Scherebene S fest. Die Scherebene S steht normalerweise senkrecht auf die Längsrichtung A des Stangenmaterials R. Das über das Festmesser 10 bzw. die Scherebene S hinausragende, bis zum Längsanschlag 50 reichende Stück des Stangenmaterials R bildet einen Endabschnitt R_{E}, der durch die Vorrichtung vom Rest des Stangenmaterials R abgeschert wird.

Das bewegliche Abschnittmesser 30 ist durch an sich bekannte, in der Zeichnung durch einen Pfeil 35 symbolisierte Antriebsmittel angetrieben. Die Scherbewegung verläuft in Richtung auf das Festmesser 10 zu. Der dabei zurückgelegte eigentliche Scherweg ist definiert als die Wegstrecke des Abschnittmessers 30 zwischen dem Eingriff desselben in das Stangenmaterial R und der vollständigen Abscherung des Endabschnitts R_{E} vom Stangenmaterial R, entspricht also im Wesentlichen der Querabmessung des Stangenmaterials R in Bewegungsrichtung des Abschnittmessers 30.

Für die Einführung bzw. den Vorschub des Stangenmaterials R sind an sich bekannte, in der Zeichnung nur durch einen Pfeil 1 symbolisierte Vorschubmittel vorgesehen, welche beispielsweise eine am Umfang des Stangenmaterials R angreifende, öffen- und schliessbare Einzugsanordnung umfassen, die in Längsrichtung hin- und hergehend beweglich antreibbar ist.

Mittels der Klemmvorrichtung 20 kann das Stangenmaterial R während des Schervorgangs in Längsrichtung festgehalten werden. Die Klemmvorrichtung 20 ist dazu gegen das Stangenmaterial R pressbar. Die dafür erforderlichen, an sich bekannten Antriebsmittel sind in der Zeichnung durch einen Pfeil 25 symbolisiert.

Wie die Figur 2 weiter zeigt, hat der Längsanschlag 50 einen ambossartig verbreiterten Anschlagkopf 51 und einen Anschlagschaft 52, der sich parallel zur Längsrichtung des Stangenmaterials R erstreckt. Das Stangenmaterial R bzw. dessen Endabschnitt R_{E} sind während des Abschervorgangs stirnseitig in Anlage mit der Vorder- bzw. Stirnfläche 51a des Anschlagkopfs 51. Die Vorder- bzw. Stirnfläche 51a verläuft senkrecht oder vorzugsweise unter einem Winkel von 90°-88° geneigt zur Längsrichtung (Achse) des Stangenmaterials R.

Der Anschlagschaft 52 ist mit einer koaxialen Kolbenstange 61 verschraubt und damit in Längsrichtung kinematisch gekoppelt. Die Kolbenstange 61 ist wiederum mit einem Anschlagkolben 62 kinematisch verbunden, insbesondere einstückig mit diesem ausgebildet. Der Anschlagkolben 62 und seine Kolbenstange 61 sind in einer Kolbenkammer 63 eines feststehend angeordneten Kolbengehäuses 60 axial beweglich gelagert. In die Kolbenkammer 63 münden in axialer bzw. Längsrichtung vor und hinter dem Kolben 62 Anschlussleitungen 65 und 66 für ein Hydraulikmedium. Über die Anschlussleitung 65 kann der Anschlagkolben 62 und damit indirekt auch der Längsanschlag 50 in Richtung auf den Endabschnitt R_{E} des Stangenmaterials R hin mit Druck beaufschlagt werden. Die durch diese Druckbeaufschlagung erzeugte Druckkraft ist in Fig. 3 mit F_{D} bezeichnet. Über die Anschlussleitung 66 kann der Anschlagkolben 62 und damit indirekt auch der Längsanschlag 50 in der Gegenrichtung bewegt werden.

Die Kolbenstange 61 und der Anschlagkolben 62 weisen eine axiale Bohrung 64 auf, in welche sich eine stangenförmige Positionsmesssonde 71 einer Positionsmessanordnung 70 hinein erstreckt. Die Positionsmesssonde 71 ist feststehend angeordnet. Im Anschlagkolben 62 ist ein Positionsmagnet 72 angeordnet, der die Positionsmesssonde 71 ringförmig umschliesst und mit dem Anschlagkolben 62 mit beweglich ist. Die Positionsmessanordnung 70 arbeitet nach dem magnetostriktiven Prinzip. Dabei ist im Inneren der Positionsmesssonde 71 geschützt ein ferromagnetisches Messelement (Wellenleiter) angeordnet. Der bewegte Positionsmagnet 72 erzeugt im Wellenleiter ein magnetisches Längsfeld. Läuft ein Stromimpuls durch die Positionsmesssonde 71, entsteht radial um das magnetische Längsfeld ein zweites Magnetfeld. Das Zusammentreffen beider Magnetfelder am Messort löst einen Drehimpuls im Wellenleiter aus. Dieser läuft als torsionale Körperschallwelle mit Ultraschallgeschwindigkeit vom Messort zu einer Sensorelektronik 73 am Kopf der Positionsmesssonde 71. Die Sensorelektronik 73 erfasst die Körperschallwelle hochgenau und wandelt sie in wegproportionale Positionssignale um, anhand welcher die axiale Lage des Anschlagkolbens 62 und damit auch die axiale Lage des Längsanschlags 50 erfassbar ist. Die Positionsmessanordnung 70 weist vorzugsweise eine sehr hohe Auflösung in der Grössenordnung von 1 µm auf.

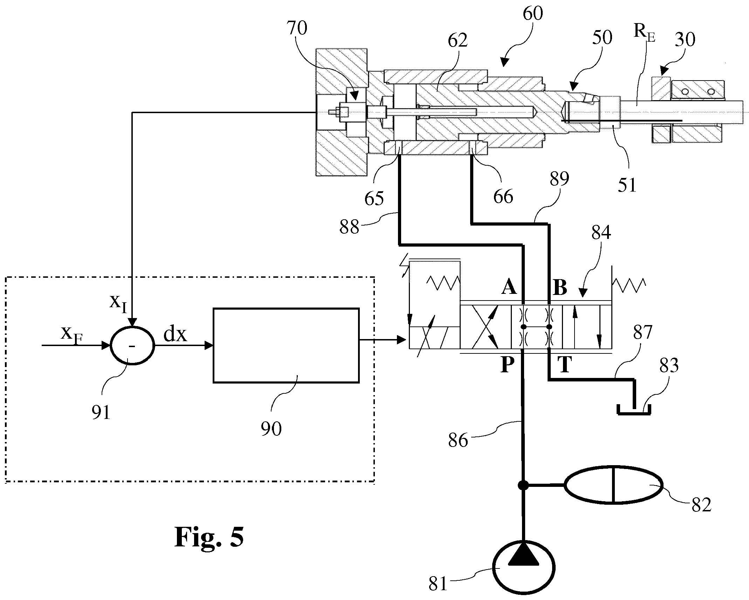

In Fig. 5 ist schematisch eine erste Variante einer Hydraulikanordnung dargestellt, mittels welcher die Druckbeaufschlagung des Längsanschlags 50 und damit des abzuscherenden Endabschnitts R_{E} des Stangenmaterials R indirekt über den Anschlagkolben 62 im Kolbengehäuse 60 implementiert ist.

Die Hydraulikanordnung umfasst eine hydraulische Druckversorgung 81, einen Hydraulikdruckspeicher 82, einen Hydrauliktank 83 und ein kontinuierlich regelbares Servoventil 84. Das Servoventil 84 wird von einem mit der Positionsmessanordnung 70 zusammenarbeitenden Regler 90 angesteuert. Der Hydraulikdruckspeicher 82 ist über das Servoventil 84 (je nach Stellung des letzteren) mit den Anschlussleitungen 65 und 66 im Kolbengehäuse 60 kommunizierend verbunden. Der Hydrauliktank 83 ist an das Servoventil 84 angeschlossen. Die entsprechenden Hydraulikmedium führenden Leitungen sind mit 86, 87, 88 und 89 bezeichnet. In der Praxis ist das Servoventil 84, wie aus Fig. 1 ersichtlich, unmittelbar an das Kolbengehäuse 60 angebaut, so dass die beiden Leitungen 88 und 89 sehr kurz ausfallen können.

Die grundsätzliche Funktionsweise der Hydraulikanordnung ist wie folgt:
Durch vom Regler 90 geregeltes Öffnen des Servoventils 84 strömt unter Druck stehendes Hydraulikmedium aus dem Hydraulikdruckspeicher 82 über die Leitung 88 in das Kolbengehäuse 60 und beaufschlagt den Anschlagkolben 62, wobei sich dieser bewegt. Die Leitung 89 ist dabei mit der Leitung 87 verbunden, so dass das verdrängte Hydraulikmedium in den Hydrauliktank 82 strömen kann. Der kontrollierte Druckaufbau im Kolbengehäuse erfolgt durch entsprechende Regelung des Servoventils 84 über den Regler 90 in zeitlicher Zuordnung zur Bewegung des Abschnittmessers 30.

Zum Abbau des Drucks wird das Servoventil 84 so verstellt, dass die Leitung 88 mit der Leitung 87 verbunden wird und das Hydraulikmedium in den Hydrauliktank 82 strömen kann.

Zur Zurückstellung des Anschlagkolbens 62 wird das Servoventil 84 so eingestellt, dass Hydraulikmedium aus dem Hydraulikdruckspeicher 82 über die Leitung 89 in das Kolbengehäuse 60 fliessen und den Kolben von der anderen Seite beaufschlagen kann. Die Leitung 88 ist dabei mit der Leitung 87 verbunden, so dass das verdrängte Hydraulikmedium in den Hydrauliktank 82 strömen kann. Alternativ kann zur Rückstellung des Anschlagkolbens 62 auch ein passend angeordnetes Federpaket oder dergleichen vorgesehen sein. Eventuell kann die Rückstellung des Anschlagkolbens 62 auch durch die Vorschubbewegung des Stangenmaterials R realisiert sein.

Die prinzipielle Arbeitsweise des erfindungsgemässen Verfahrens ist wie folgt:
Zu Beginn eines Verfahrenszyklusses wird das Stangenmaterial R in Längsrichtung A zwischen dem Festmesser 10 und dem in der in Fig. 1 gezeigten Ausgangsposition befindlichen beweglichen Abschnittmesser 30 so weit vorgeschoben, bis sein vorlaufendes Ende mit dessen Stirnfläche auf die Stirnfläche 51a des Anschlagkopfs 51 des Längsanschlags 50 aufsteht, das Stangenmaterial R sich also mit seinem abzuscherenden Endabschnitt R_{E} in Anlage mit dem Längsanschlag 50 befindet.

Im nächsten Verfahrensschritt wird das Stangenmaterial R mittels der Klemmvorrichtung 20 gegen das Festmesser 10 gepresst und dadurch gegen Verschiebung in Längsrichtung festgehalten (Fig. 3).

Anschliessend beginnt der Schervorgang. Dazu wird das bewegliche Abschnittmesser 30 quer zur Längsrichtung des Stangenmaterials R in Richtung auf das Festmesser 10 bewegt. Sobald das bewegliche Abschnittmesser 30 mit dem Stangenmaterial R in Eingriff kommt, wird dieses gegen das Festmesser 10 gepresst, so dass auch das Festmesser 10 mit seiner Scherlippe 12a in Eingriff mit dem Stangenmaterial R kommt.

Unmittelbar darauf oder mit einer kleinen zeitlichen Verzögerung wird der Längsanschlag 50 über den Anschlagkolben 62 gegen den Endabschnitt R_{E} des Stangenmaterials R gepresst, so dass der Endabschnitt R_{E} in seiner Längsrichtung mit einer Druckkraft F_{D} beaufschlagt wird. Die Scherlippe 12a des Festmessers 10 ist zu diesem Zeitpunkt bereits in Eingriff mit dem Stangenmaterial R und stützt dieses ab, so dass es sich unter der Druckkraft F_{D} nicht zurück verschieben kann. Unterstützt wird diese Abstützung in Längsrichtung, sofern vorhanden, noch durch die Klemmvorrichtung 20.

Durch die auf den Endabschnitt R_{E} des Stangenmaterials R einwirkende Druckkraft F_{D} wird im Endabschnitt R_{E} ein Druckspannungszustand erzeugt, der sich den Scher- und Zugspannungen überlagert und Rissbildungen und andere unerwünschte Artefakte verhindert.

Das bewegliche Abschnittmesser 30 wird nun bei angelegter Druckkraft F_{D} weiter quer zum Stangenmaterial R bewegt, bis der Endabschnitt R_{E} vollständig abgeschert ist. Knapp vorher oder spätestens am Ende des Scherwegs (wenn der Endabschnitt R_{E} vollständig abgeschert ist) wird die Beaufschlagung des Endabschnitts R_{E} mit der Druckkraft F_{D} beendet.

Nun wird der abgescherte Endabschnitt R_{E} entnommen und das bewegliche Abschnittmesser 30 und der Längsanschlag 50 sowie gegebenenfalls die Klemmvorrichtung 20 werden in ihre respektiven Ausgangspositionen zurückbewegt. Hierauf kann ein neuer Verfahrenszyklus beginnen.

Mit Ausnahme der konkreten Ausbildung der Hydraulikanordnung und der Positionsmessanordnung 70 entsprechen die erfindungsgemässe Vorrichtung und das erfindungsgemässe Verfahren soweit dem bekannten Stand der Technik, wie er insbesondere in der schon eingangs angeführten CH 702 984 B1 im Detail beschrieben ist. Der Fachmann bedarf daher soweit keiner näheren Ausführungen.

Die Fig. 4 zeigt stark vereinfacht eine Ansicht der Scherfläche eines abgescherten Endabschnitts R_{E}. Die Scherfläche setzt sich zusammen aus einer glatten und ebenen sogenannten Anschnittfläche 101 mit geringer Rauhtiefe und einer Bruchfläche 102 mit Bereichen unterschiedlicher Rauhtiefen. Die rauhe, brüchige Bruchfläche bzw. der Ausbruch 102 entsteht, wenn das Formänderungsvermögen des Werkstoffs erschöpft ist.

Beim Scheren von Stangenmaterial beträgt die Kraft, die axial auf den Längsanschlag 50 wirkt, ca. ein Viertel der Scherkraft. Diese ist umso höher, je grösser der zu scherende Stangendurchmesser bzw. je tiefer die Erwärmungstemperatur ist. Es entstehen also relativ hohe Kräfte, die eine gewisse Einfederung des Längsanschlags hervorrufen können, nachdem die Spiele im Antrieb des Längsanschlags selber eliminiert wurden. Diese Einfederung, die im Zehntelmillimeterbereich stattfindet, hat einen erheblichen Einfluss auf den Spannungszustand in der Scherzone und somit auf das Formänderungsvermögen und das Bruchverhalten des Werkstoffs.

Um die gewünschte Scherqualität der Trennflächen am Abschnitt zu erreichen, muss der Anteil der Bruchfläche bzw. des Ausbruchs an der gesamten Scherfläche mittels verfahrenstechnischer und apparativer Massnahmen des Scherverfahrens bzw. der Schervorrichtung möglichst gering gehalten werden. Dies erfolgt, wie nachstehend näher ausgeführt, durch eine aktive Mitgestaltung des Spannungszustands im Endabschnitt mittels des Längsanschlags 50.

Gemäss einem der wesentlichsten Aspekte der Erfindung erfolgt diese aktive Mitgestaltung des Spannungszustands durch eine Beaufschlagung des Endabschnitts R_{E} mit einer Druckkraft mit lagegeregelter Längsposition des Längsanschlags 50. Darunter ist zu verstehen, dass die (axiale) Längsposition des Längsanschlags 50 während des Schervorgangs auf einen konstanten Wert geregelt wird, sobald der Längsanschlag 50 in Kontakt mit dem Endabschnitt R_{E} ist. Der erwähnten Einfederung des Längsanschlags 50 wird durch die Lageregelung des Längsanschlags 50 dadurch entgegengewirkt, dass der auf den Längsanschlag 50 über den Anschlagkolben 62 wirkende hydraulische Druck und damit die auf den Endabschnitt R_{E} einwirkende Kraft F_{D} entsprechend geregelt wird. Dies erfolgt mittels des das Servoventil 84 steuernden Reglers 90, dem als Eingangsgrösse eine von einem Subtrahierglied 91 gebildete Positionsabweichung dx zugeführt wird, welche sich aus der Differenz der von der Positionsmessanordnung 70 gemessenen Ist-Position x des Längsanschlags 50 und einer vorgegebenen (und in der Vorrichtung gespeicherten) Positions-Führungsgrösse (Soll-Position) x_{F} ergibt. Während des eigentlichen Schervorgangs ist die Positions-Führungsgrösse ein konstanter Wert. Aufgrund der Positionsabweichung dx steuert der Regler 90 mittels des Servoventils 84 die hydraulischen Drücke in der Kolbenkammer 63 so, dass die Positionsabweichung dx minimiert wird, im Idealfall also verschwindet, und der Längsanschlag 50 damit seine durch die Führungsgrösse x_{F} vorgegebene Position einnimmt bzw. beibehält. Durch die lagegeregelte Kraftbeaufschlagung des Endabschnitts R_{E} kann umgekehrt auch verhindert werden, dass der Endabschnitt R_{E} durch eine zu hohe axiale Kraftbeaufschlagung unerwünscht stark gestaucht wird.

Mittels der Lageregelung der Längsposition des Längsanschlags 50 kann auch die Soll-Länge des abzuscherenden Endabschnitts R_{E} eingestellt werden. Der Längsanschlag 50 wird dazu vor Beginn des eigentlichen Schervorgangs anhand der in der Vorrichtung abgespeicherten Führungsgrösse x_{F} in Längsrichtung in eine Position verfahren, die der gewünschten Soll-Länge des Endabschnitts R_{E} entspricht.

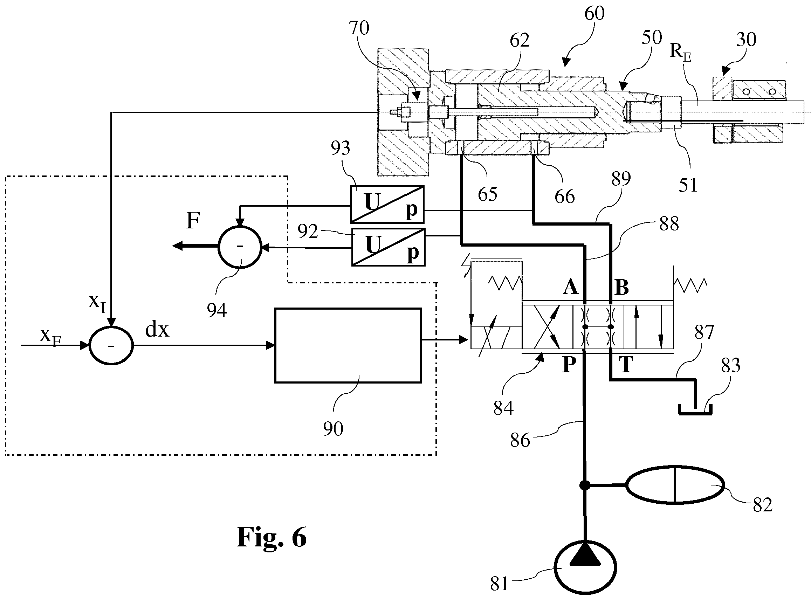

In Fig. 6 ist eine Variante der Vorrichtung dargestellt, welche gegenüber der Variante gemäss Fig. 5 zusätzlich noch mit einer Messanordnung zur Messung der vom Längsanschlag 50 auf den abzuscherenden Endabschnitt R_{E} ausgeübten Druckkraft F versehen ist. Die Messanordnung umfasst zwei Drucksensoren (Druck-Spannungswandler) 92 und 93 und ein Subtrahierglied 94. Die beiden Drucksensoren 92 und 93 messen die Drücke in den Leitungen 88 und 89 bzw. zu beiden Seiten des Anschlagkolbens 62. Das Subtrahierglied 94 bildet die Differenz F, welche (unter Berücksichtigung der Kolbenflächen) ein Mass für die vom Längsanschlag 50 auf den Endabschnitt R_{E} bzw. umgekehrt ausgeübte Druckkraft F_{D} darstellt. Das Differenz-Signal F kann z.B. zur Abschnittslängenüberwachung herangezogen werden, wobei ein gegenüber einem Vorgabewert zu geringer Wert darauf hindeutet, dass der abzuscherende Endabschnitt zu kurz ist oder überhaupt fehlt. Ausserdem kann das Differenz-Signal F zur Fernüberwachung bzw. Diagnose der erreichten Qualität der Scherfläche (Bildung des Ausbruchs) während des Scherprozesses herangezogen werden. Darauf wird weiter unten noch näher eingegangen.

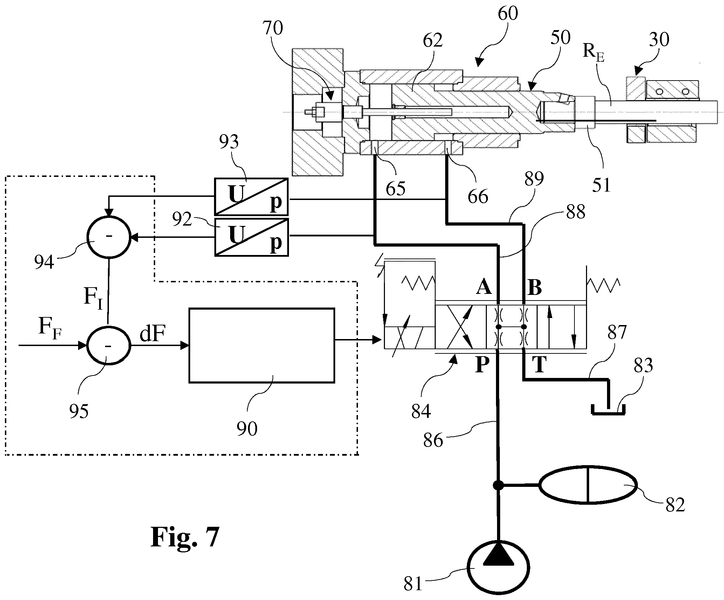

In Fig. 7 ist eine Vorrichtungsvariante dargestellt, welche die den Endabschnitt R_{E} beaufschlagende Druckkraft F_{D} aufgrund einer in der Vorrichtung abgespeicherten Kraft-Führungsgrösse F_{F} regelt (Kraftregelung). Die zwei Drucksensoren (Druck-Spannungswandler) 92 und 93 messen die Drücke in den Leitungen 88 und 89 bzw. zu beiden Seiten des Anschlagkolbens 62, das Subtrahierglied 94 bildet die Druckdifferenz F_{I}, welche ein Mass für die auf den Endabschnitt R_{E} einwirkende Druckkraft F_{D} darstellt (Ist-Wert). Ein weiteres Subtrahierglied 95 bildet die Differenz dF zwischen der Druckdifferenz F_{I} und der Kraft-Führungsgrösse F_{F}. Der Regler 90 regelt anhand der Differenz dF mittels des Servoventils 84 die Drücke in der Kolbenkammer zu beiden Seiten des Anschlagkolbens 62 so, dass die den Endabschnitt R_{E} beaufschlagende Druckkraft F_{D} der Kraft-Führungsgrösse Fp folgt. Die Kraftüberlagerungsfunktion, z.B. Rechteck oder Dreieck) ist in Form der Kraft-Führungsgrösse F_{F} als Rezept in der Maschinensteuerung für die jeweiligen Stangendurchmesser, Werkstoffe und Erwärmungstemperaturen hinterlegt. Im Übrigen ist die Hydraulikanordnung gleich aufgebaut wie diejenigen der Figuren 5 und 6. Die Hydraulikanordnung der Fig. 7 dient zur kraftgeregelten Druckkraftbeaufschlagung des abzuscherenden Endabschnitts R_{E}.

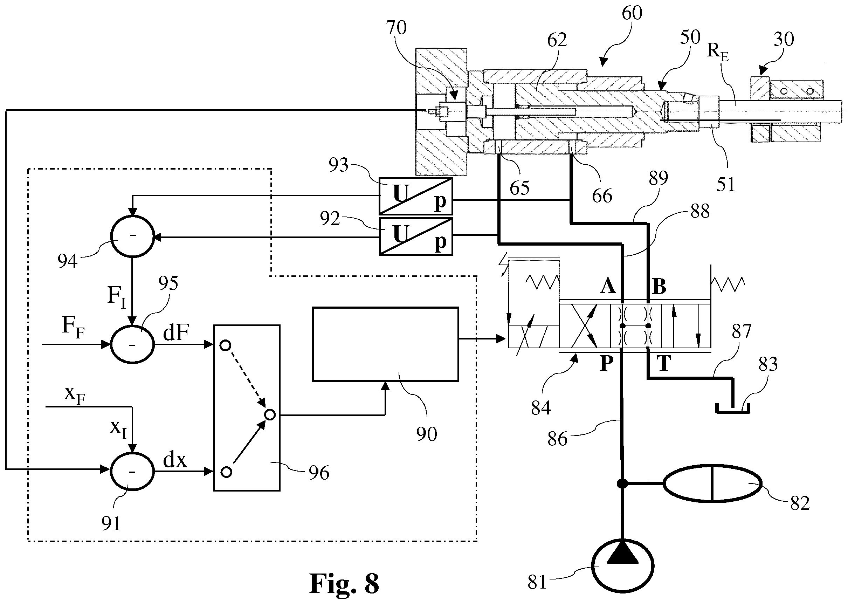

Gemäss einem in Fig. 8 schematisch dargestellten, besonders vorteilhaften Ausführungsbeispiel der erfindungsgemässen Vorrichtung ist diese so ausgebildet, dass sie die Merkmale der drei vorstehend beschriebenen Varianten insofern vereint, also sie sowohl eine lagegeregelte als auch eine kraftgeregelte Druckkraftbeaufschlagung des Endabschnitts R_{E} ermöglicht, wobei benutzergesteuert (in der Fig. 8 durch ein Umschaltglied 96 symbolisiert) jeweils die eine oder die andere der beiden Regelstrategien (Lageregelung/Kraftregelung) zur Anwendung kommt. Auf diese Weise kann je nach Anwendungsfall (Material, Abmessungen, Temperatur des abzuscherenden Teils) die jeweils zweckmässigste Regelstrategie gewählt werden. Darauf wird weiter unten noch näher eingegangen.

Die in den Figuren 5-8 strichliert umrahmten Komponenten sind vorteilhafterweise softwaremässig implementiert und zweckmässigerweise jeweils in eine Gesamtsteuerung für die Schervorrichtung bzw. eine mit der Schervorrichtung ausgestattete Anlage, typischerweise eine Umformanlage, integriert.

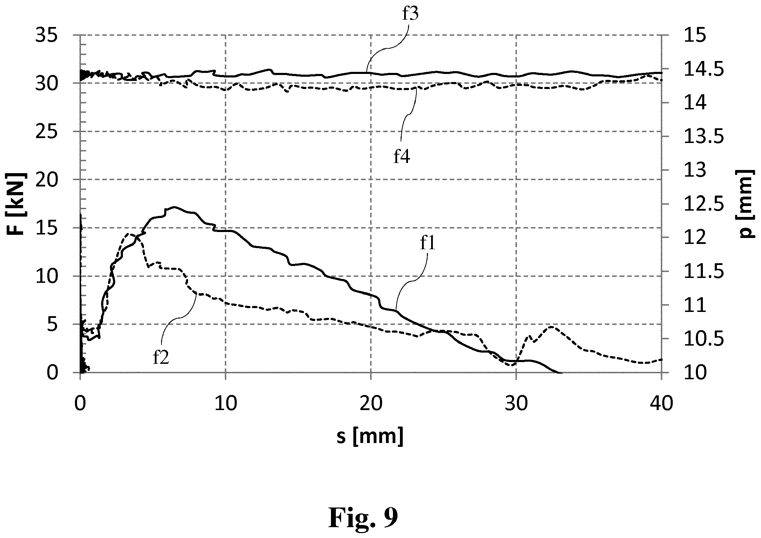

Die Figuren 9-12 zeigen typische Verläufe der Anschlagkraft während des Abschervorgangs eines Stangenmaterials mit (hier im Beispiel) 32 mm Durchmesser. Unter Anschlagkraft ist in diesem Zusammenhang die vom abzuscherenden Endabschnitt R_{E} des Stangenmaterials R auf den Längsanschlag 50 wirkende Kraft zu verstehen, die z.B. wie anhand der Fig. 6 erläutert gemessen werden kann. Nach dem Grundsatz Actio gleich Reactio entspricht die Anschlagkraft der vom Längsanschlag 50 auf den Endabschnitt ausgeübten Druckkraft F_{D}. Die Begriffe Druckkraft F_{D} und Anschlagkraft werden daher im Folgenden gleichbedeutend verwendet.

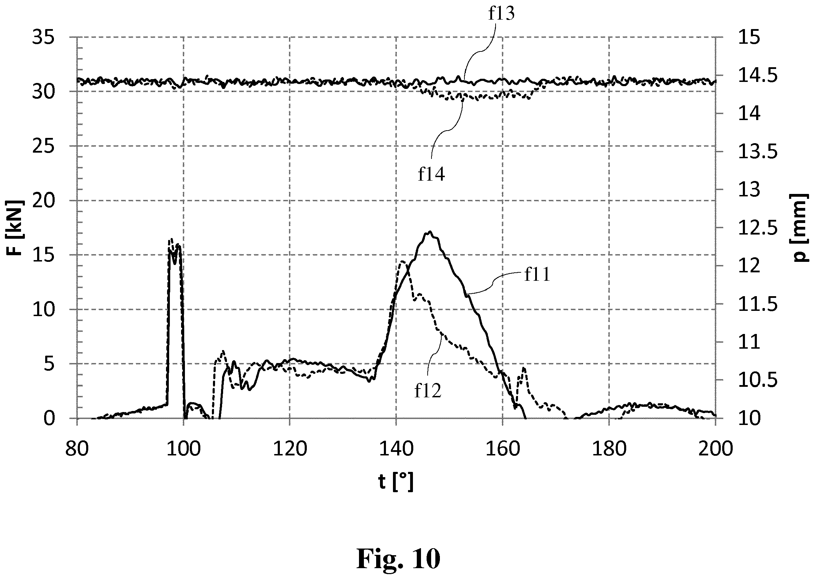

In den Figuren 9, 11 und 12 ist auf der Abszisse der Scherweg bzw. Scherhub s des Schermessers aufgetragen, es handelt sich also um Kraft-Weg-Diagramme. In Fig. 10 ist auf der Abszisse eine in Winkelgraden des Maschinenwinkels der Vorrichtung ausgedrückte Zeit t aufgetragen, es handelt sich hier also um ein Kraft-ZeitDiagramm. Der eigentliche Schervorgang findet (hier im Beispiel) im Maschinenwinkelbereich von ca. 135° bis 170° statt. Die zeitlich davor und dahinter liegenden Abschnitte der Kurvenverläufe stellen die Kräfteverhältnisse beim Auftreffen der Stange auf den Anschlag (Peak bei ca. 95°) und während einer darauffolgenden Ruhephase bzw. nach Beendigung des eigentlichen Schervorgangs dar und sind für das Verständnis der Erfindung nicht von Relevanz und daher nicht näher erläutert.

Die Kurve f1 in Fig. 9 stellt den Verlauf der Anschlagkraft über den Scherhub s bei erfindungsgemäss lagegeregeltem Längsanschlag 50 dar. Die Kurve f2 zeigt zum Vergleich den Verlauf der Anschlagkraft, wenn die Lageregelung des Längsanschlags nicht aktiviert ist. Die Kurve f2 zeigt bei ca. 29 mm Scherhub eine deutlich ausgeprägte Delle, welche den sich bildenden Ausbruch markiert. Bei aktivierter Lageregelung des Längsanschlags (Kurve f1) fehlt eine solche Delle, die Anschlagkraft nimmt bis zum Ende des Schervorgangs im Wesentlichen gleichförmig ab. Es hat sich gezeigt, dass für die Erreichung einer befriedigenden Scherqualität ein von einem Maximalwert kontinuierlich absinkender Verlauf der Anschlagkraft analog der Kurve f1 in Fig. 9 erforderlich ist.

In Fig. 9 ist auf der rechten Ordinate die Längsposition p des Längsanschlags 50 aufgetragen. Die Kurve f3 zeigt den Positionsverlauf des Längsanschlags über den Scherhub s bei aktivierter Lageregelung, die Kurve f4 den Positionsverlauf bei nicht aktivierter Lageregelung. Bei aktivierter Lageregelung ist der Positionsverlauf (abgesehen von minimalen Regelschwankungen) praktisch konstant, während er bei nicht aktivierter Lageregelung während des Schervorgangs deutlich vom (konstanten) Soll-Verlauf abweicht.

Fig. 10 zeigt den Verlauf der Anschlagkraft und der Längsposition des Längsanschlags über die in Winkelgraden ausgedrückte Zeit t. Die Kurven f11 und f13 stellen die Verläufe bei aktiver Lageregelung dar, die Kurven f12 und f14 bei nicht aktivierter Lageregelung. Fig. 10 entspricht somit im Wesentlichen der Fig. 9 mit dem Unterschied, dass die Kurven über die Zeit t und nicht über den Scherhub s dargestellt sind.

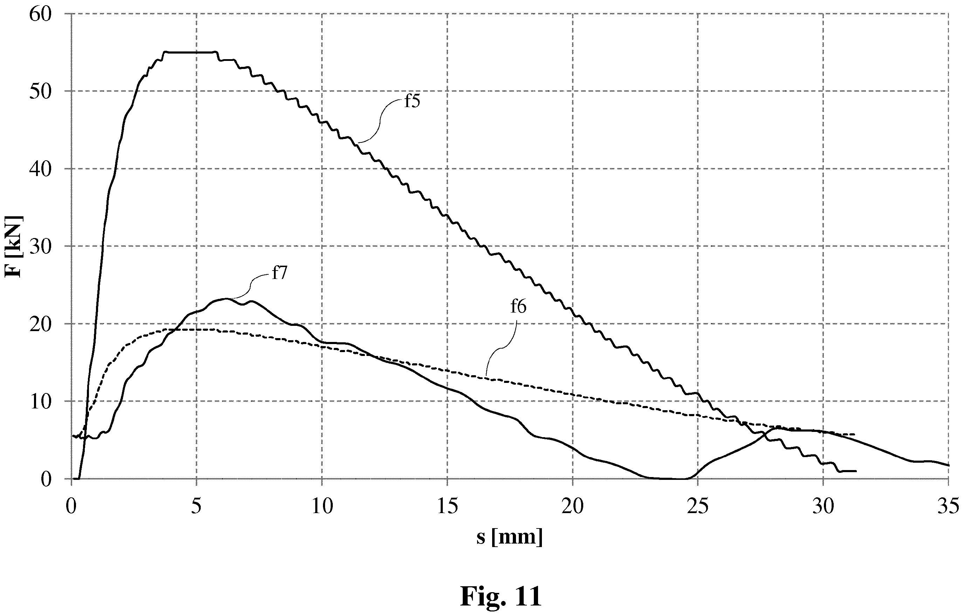

Fig. 11 illustriert mit Kurve f5 einen (analytisch berechneten) Verlauf der Scherkraft über den Scherhub s. Die Kurve f6 stellt einen (analytisch berechneten) Verlauf der Anschlagkraft über den Scherhub s dar. Die Kurve f7 schliesslich zeigt einen (bei aktivierter Lageregelung des Längsanschlags) tatsächlich gemessenen Verlauf der Anschlagkraft über den Scherhub s dar. Man erkennt, dass der tatsächlich gemessene Verlauf der Anschlagkraft (Kurve f7) abgesehen von kleineren Welligkeiten beim Scherhub von ungefähr 24 mm eine deutlich ausgeprägte Delle aufweist, das heisst, dass die gemessene Anschlagkraft zunächst auf ein Minimum absinkt und dann innerhalb des Scherhubs wieder deutlich ansteigt. Im vorliegenden Beispiel liegt das Minimum bzw. der Minimalwert des Anschlagkraftverlaufs unter null. Eine solche Delle weist auf einen sich bildenden Ausbruch (Ende des Glattschnittanteils in der Abschnittstirnfläche) hin. Schervorgänge mit einem solchen Verlauf der Anschlagkraft führen in der Regel nicht zu einer befriedigenden Scherqualität. Die Qualität der Scherfläche kann also anhand des gemessenen Verlaufs der Anschlagkraft kontrolliert werden.

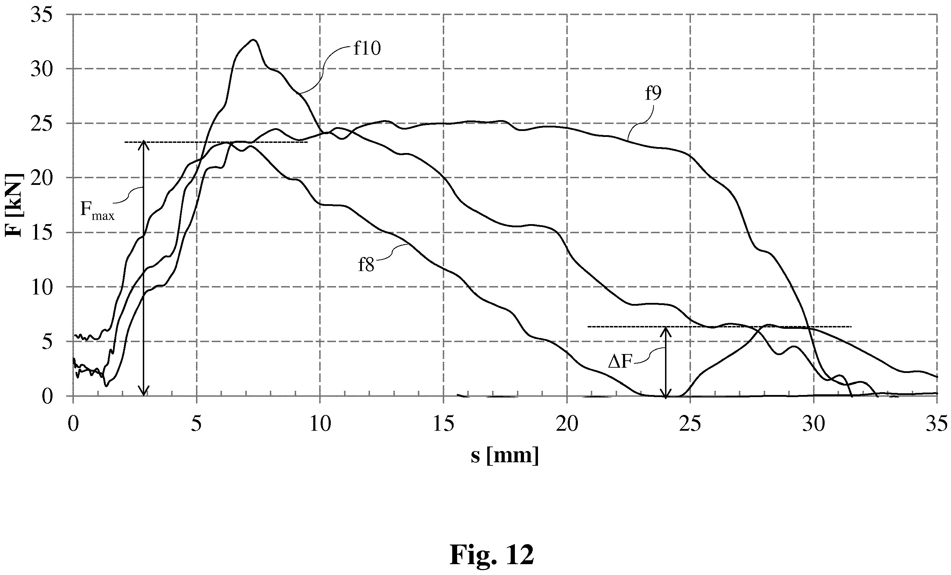

Das vorstehend erläuterte erfindungsgemässe Abscherverfahren mit Druckkraftbeaufschlagung des abzuscherenden Endabschnitts bei lagegeregelter Längsposition des Längsanschlag führt zu einer deutlichen Reduktion der Maschinenbelastung bei trotzdem hoher Qualität der Scherfläche und vermeidet gleichzeitig die Gefahr, dass der Endabschnitt unerwünscht gestaucht wird. Je nach Material, Abmessungen und Temperatur des Stangenmaterials kann es jedoch vorkommen, dass die gewünschte Scherqualität mit dieser lagegeregelten Druckkraftbeaufschlagung nicht erreicht wird. In diesem Fall wird gemäss einem weiteren wichtigen Aspekt der Erfindung zu einer kraftgeregelten Druckkraftbeaufschlagung gewechselt (Fig. 7), wie sie im Grundsatz z.B. aus der schon erwähnten CH 702 984 B1 bekannt ist. Die Entscheidung über diesen Wechsel der Regelstrategie (Lageregelung/Kraftregelung) kann durch die Bedienungsperson der Schervorrichtung anhand des Verlaufs der gemessenen Anschlagkraft F (Fig. 6) über die Scherzeit oder den Scherhub erfolgen. Wie schon anhand der Fig. 11 erläutert wurde, entsteht beim Beginn des Ausbruchs im Anschlagkraftverlauf eine Delle. Wenn diese Delle zu stark ausgeprägt ist, ist dies ein Indiz dafür, dass die Regelstrategie gewechselt werden sollte, also auf kraftgeregelte Druckkraftbeaufschlagung des Endabschnitts umgeschaltet werden sollte. Bei der Analyse des Verlaufs der Anschlagkraft werden kleinere Welligkeiten des Kurvenverlaufs nicht berücksichtigt. Eine Delle des Verlaufs der Anschlagkraft liegt vor, wenn die gemessene Anschlagkraft zunächst auf ein Minimum absinkt und dann innerhalb des Scherhubs wieder deutlich ansteigt, wobei kleinere regeltechnische Schwankungen bzw. Welligkeiten des Verlaufs nicht berücksichtigt werden. Insbesondere wird eine Delle als solche erkannt, wenn der Verlauf der gemessenen Druckkraft F_{D} vom Minimum um eine Differenz ΔF ansteigt, welche mindestens 10%, vorzugsweise 15% - 30%, des Maximalwerts Fₘₐₓ der gemessenen Druckkraft F_{D} beträgt (siehe Fig. 12). Das Minimum der gemessenen Anschlagkraft kann dabei auch einen Wert gleich oder kleiner null aufweisen.

In der Fig. 12 stellt die Kurve f8 einen bei aktivierter Lageregelung des Längsanschlags gemessenen Verlauf der Anschlagkraft ähnlich der Kurve f7 in Fig. 11 dar. Die Kurve f8 weist eine ausgeprägte Delle bei ca. 24 mm Scherhub auf, die Scherqualität wird daher mangelhaft sein. Die Bedienungsperson der Schervorrichtung stellt diese daher auf eine Regelstrategie mit kraftgeregelter Druckkraftbeaufschlagung des abzuscherenden Endabschnitts um, wobei dann natürlich die Lageregelung des Längsanschlags deaktiviert ist. In Fig. 12 sind beispielsweise zwei mit aktivierter Kraftregelung gemessene Verläufe der Anschlagkraft dargestellt. Die Kurve f9 zeigt die Anschlagkraft bei einer kraftgeregelten Druckkraftbeaufschlagung des abzuscherenden Endabschnitts bei rechteckförmiger Drucküberlagerung, die Kurve f10 die Anschlagkraft bei dreieckförmiger Drucküberlagerung. Unter Drucküberlagerung ist der durch die Kraft-Führungsgrösse F_{F} (Fig. 7) definierte Kraftverlauf über den Scherhub zu verstehen.

Zu den vorbeschriebenen Vorrichtungen und Verfahren sind weitere Variationen realisierbar. Insbesondere könnte die Auswertung des Verlaufs der Anschlagkraft zur Beurteilung der Scherqualität und die Wahl der Regelstrategie (Lageregelung/Kraftregelung) auch computergesteuert automatisiert erfolgen.

Das erfindungsgemässe Abscherverfahren und die entsprechende erfindungsgemässe Vorrichtung sind im Zusammenhang mit Umformprozessen über den gesamten Temperaturbereich von Warmumformung über Umformen mit abgesenkter Temperatur bis hin zum Kaltumformen einsetzbar.

## Patentansprüche

1. Verfahren zum Abscheren eines Endabschnitts (R_{E}) von einem Stangenmaterial (R) mittels eines gegen ein Festmesser (10) quer zur Längsrichtung des Stangenmaterials beweglichen Abschnittmessers (30), wobei der abzuscherende Endabschnitt (R_{E}) stirnseitig in Anlage mit einem Längsanschlag (50) gebracht und während des Schervorgangs über den Längsanschlag (50) mit einer Druckkraft (F_{D}) in Längsrichtung des Stangenmaterials (R) beaufschlagt wird, **dadurch gekennzeichnet, dass** die Beaufschlagung des Endabschnitts (R_{E}) mit der Druckkraft (F_{D}) während des Schervorgangs mit lagegeregelter Längsposition des Längsanschlags (50) erfolgt.

2. Verfahren nach Anspruch 1, **dadurch gekennzeichnet, dass** die Längsposition des Längsanschlags (50) während des Schervorgangs auf einen konstanten Wert geregelt wird.

3. Verfahren nach Anspruch 1 oder 2, **dadurch gekennzeichnet, dass** der Verlauf der vom Längsanschlag (50) während des Schervorgangs auf den Endabschnitt (R_{E}) ausgeübten Druckkraft (F_{D}) gemessen wird.

4. Verfahren nach Anspruch 3, **dadurch gekennzeichnet, dass** der Verlauf der gemessenen Druckkraft (F_{D}) zur Beurteilung der Qualität der Scherfläche des Endabschnitts (R_{E}) ausgewertet wird.

5. Verfahren nach einem der Ansprüche 1-4, **dadurch gekennzeichnet, dass** bei ungenügender Qualität der Scherfläche des Endabschnitts (R_{E}) auf eine Betriebsart gewechselt wird, bei welcher die Beaufschlagung des abzuscherenden Endabschnitts (R_{E}) mit der Druckkraft (F_{D}) kraftgeregelt erfolgt, wobei die vom Längsanschlag (50) auf den abzuscherenden Endabschnitt (R_{E}) ausgeübte Druckkraft (F_{D}) nach Massgabe einer vorgegebenen Kraft-Führungsgrösse (F_{F}) geregelt wird.

6. Verfahren nach Anspruch 4 oder 5, **dadurch gekennzeichnet, dass** die Qualität der Scherfläche als ungenügend beurteilt wird, wenn der Verlauf der gemessenen Druckkraft (F_{D}) vor dem Ende des Schervorgangs eine Delle aufweist, wobei der Verlauf der Druckkraft unter Nichtberücksichtigung regeltechnischer Schwankungen auf ein Minimum sinkt und dann wieder ansteigt.

7. Verfahren nach Anspruch 6, **dadurch gekennzeichnet, dass** die Qualität der Scherfläche als ungenügend beurteilt wird, wenn der Verlauf der gemessenen Druckkraft (F_{D}) vom Minimum um eine Differenz (ΔF) ansteigt, welche mindestens 10%, vorzugsweise 15% - 30%, des Maximalwerts (Fₘₐₓ) der gemessenen Druckkraft (F_{D}) beträgt.

8. Verfahren nach Anspruch 6 oder 7, **dadurch gekennzeichnet, dass** die Qualität der Scherfläche als ungenügend beurteilt wird, wenn der Verlauf der gemessenen Druckkraft (F_{D}) vor dem Ende des Schervorgangs auf einen Wert gleich oder kleiner null sinkt.

9. Vorrichtung zur Durchführung des Verfahrens zum Abscheren eines Endabschnitts (R_{E}) von einem Stangenmaterial (R) nach einem der Ansprüche 1-8, mit einem Festmesser (10), einem quer zur Längsrichtung des Stangenmaterials (R) gegen das Festmesser (10) beweglich angetriebenen Abschnittmesser (30), einem in Längsrichtung bewegbaren Längsanschlag (50) für den abzuscherenden Endabschnitt (R_{E}) des Stangenmaterials (R) und einer Hydraulikanordnung (81-84, 86-89), um den Längsanschlag (50) zu bewegen und den Endabschnitt (R_{E}) während des Schervorgangs über den Längsanschlag (50) mit einer Druckkraft (F_{D}) in Längsrichtung des Stangenmaterials (R) zu beaufschlagen, **dadurch gekennzeichnet, dass** sie eine Positionsmessanordnung (70) zur Erfassung der Längsposition des Längsanschlags (50) und einen Regler (90) aufweist, der zur Steuerung der Hydraulikanordnung (81-84, 86-89) aufgrund der von der Positionsmessanordnung (70) erfassten Längsposition des Längsanschlags (50) ausgebildet ist, wobei die Längsposition des Längsanschlags (50) durch den Regler (90) über die von ihm gesteuerte Hydraulikanordnung nach Massgabe einer vorgegebenen Positions-Führungsgrösse (x_{F}) regelbar ist.

10. Vorrichtung nach Anspruch 9, **dadurch gekennzeichnet, dass** der Regler (90) dazu ausgebildet ist, die Längsposition des Längsanschlags (50) während des Schervorgangs auf einen konstanten Wert zu regeln.

11. Vorrichtung nach Anspruch 9 oder 10, **dadurch gekennzeichnet, dass** die Hydraulikanordnung (81-84, 86-89) ein vom Regler (90) kontinuierlich einstellbares Servoventil (84) aufweist.

12. Vorrichtung nach einem der Ansprüche 9-11, **dadurch gekennzeichnet, dass** sie eine Messanordnung (92, 93, 94) zur Messung der vom Längsanschlag (50) auf den abzuscherenden Endabschnitt (R_{E}) ausgeübten Druckkraft (F_{D}) aufweist.

13. Vorrichtung nach Anspruch 12, **dadurch gekennzeichnet, dass** sie einen mit dem Längsanschlag (50) kinematisch verbundenen, von der Hydraulikanordnung (81-84, 86-89) durch Beaufschlagung mit einem hydraulischen Druckmedium antreibbaren Anschlagkolben (62) umfasst, und dass die Messanordnung (92, 93, 94) Drucksensoren (92, 93) zur Erfassung der Drücke des hydraulischen Druckmediums auf beiden Seiten des Anschlagkolbens (62) aufweist.

14. Vorrichtung nach einem der Ansprüche 9-13, **dadurch gekennzeichnet, dass** der Regler (90) dazu ausgebildet ist, dass mit ihm die vom Längsanschlag (50) auf den abzuscherenden Endabschnitt (R_{E}) ausgeübte Druckkraft (F_{D}) über die Hydraulikanordnung (81-84, 86-89) nach Massgabe einer vorgegebenen Kraft-Führungsgrösse (F_{F}) regelbar ist.

15. Vorrichtung nach Anspruch 14, **dadurch gekennzeichnet, dass** sie zwischen zwei Betriebsarten umschaltbar ausgebildet ist, wobei die Druckkraftbeaufschlagung des abzuscherenden Endabschnitts (R_{E}) in der einen Betriebsart mit lagegeregelter Längsposition des Längsanschlags (50) und in der anderen Betriebsart kraftgeregelt erfolgt.

## Claims

1. Method for shearing an end section (R_{E}) from a rod material (R) by means of a cutting blade (30) that is movable against a stationary blade (10), transversely with respect to the longitudinal direction of the rod material, wherein the end section (R_{E}) to be sheared is brought into contact on its end-face side with a longitudinal stop (50), and during the shearing operation is acted on, via the longitudinal stop (50), with a pressure force (F_{D}) in the longitudinal direction of the rod material (R), **characterized in that** the action of pressure force (F_{D}) on the end section (R_{E}) during the shearing operation takes place with a position-controlled longitudinal position of the longitudinal stop (50).

2. Method according to Claim 1, **characterized in that** the longitudinal position of the longitudinal stop (50) is controlled to a constant value during the shearing operation.

3. Method according to Claim 1 or 2, **characterized in that** the course of the pressure force (F_{D}) exerted by the longitudinal stop (50) on the end section (R_{E}) during the shearing operation is measured.

4. Method according to Claim 3, **characterized in that** the course of the measured pressure force (F_{D}) is evaluated in order to assess the quality of the shear surface of the end section (R_{E}).

5. Method according to one of Claims 1 to 4, **characterized in that** in the event of inadequate quality of the shear surface of the end section (R_{E}), a change is made to an operating mode in which the action of pressure force (F_{D}) on the end section (R_{E}) to be sheared takes place in a force-controlled manner, wherein the pressure force (F_{D}) exerted by the longitudinal stop (50) on the end section (R_{E}) to be sheared is controlled according to a predefined force control variable (F_{F}).

6. Method according to Claim 4 or 5, **characterized in that** the quality of the shear surface is assessed as inadequate when the course of the measured pressure force (F_{D}) has a dip prior to the end of the shearing operation, in which the course of the pressure force, disregarding control-related fluctuations, drops to a minimum and then rises again.

7. Method according to Claim 6, **characterized in that** the quality of the shear surface is assessed as inadequate when the course of the measured pressure force (F_{D}) rises from the minimum by a difference (ΔF) that is at least 10%, preferably 15% to 30%, of the maximum value (Fₘₐₓ) of the measured pressure force (F_{D}).

8. Method according to Claim 6 or 7, **characterized in that** the quality of the shear surface is assessed as inadequate when the course of the measured pressure force (F_{D}) prior to the end of the shearing operation drops to a value that is less than or equal to zero.

9. Device for carrying out the method for shearing an end section (R_{E}) from a rod material (R) according to one of Claims 1 to 8, comprising a stationary blade (10), a cutting blade (30) that is movably driven against the stationary blade (10), transversely with respect to the longitudinal direction of the rod material (R), a longitudinal stop (50), which is movable in the longitudinal direction, for the end section (R_{E}) of the rod material (R) to be sheared, and a hydraulic system (81-84, 86-89) for moving the longitudinal stop (50) and acting with a pressure force (F_{D}), via the longitudinal stop (50), on the end section (R_{E}) in the longitudinal direction of the rod material (R) during the shearing operation, **characterized in that** the device has a position measuring apparatus (70) for detecting the longitudinal position of the longitudinal stop (50), and a controller (90) that is designed for controlling the hydraulic system (81-84, 86-89) based on the longitudinal position of the longitudinal stop (50) detected by the position measuring apparatus (70), wherein the longitudinal position of the longitudinal stop (70) is controllable by the controller (90) via the hydraulic system, controlled by same, according to a predefined position control variable (x_{F}).

10. Device according to Claim 9, **characterized in that** the controller (90) is designed for controlling the longitudinal position of the longitudinal stop (50) to a constant value during the shearing operation.

11. Device according to Claim 9 or 10, **characterized in that** the hydraulic system (81-84, 86-89) has a servo valve (84) that is continuously settable by the controller (90).

12. Device according to one of Claims 9 to 11, **characterized in that** the device has a measuring system (92, 93, 94) for measuring the pressure force (F_{D}) exerted by the longitudinal stop (50) on the end section (R_{E}) to be sheared.

13. Device according to Claim 12, **characterized in that** the device includes a stop piston (62) that is kinematically connected to the longitudinal stop (50) and drivable by the hydraulic system (81-84, 86-89) by action by a hydraulic pressure medium, and the measuring system (92, 93, 94) has pressure sensors (92, 93) for detecting the pressure of the hydraulic pressure medium on both sides of the stop piston (62).

14. Device according to one of Claims 9 to 13, **characterized in that** the controller (90) is designed for controlling the pressure force (F_{D}) exerted by the longitudinal stop (50) on the end section (R_{E}) to be sheared, via the hydraulic system (81-84, 86-89) according to a predefined force control variable (F_{F}).

15. Device according to Claim 14, **characterized in that** the device is designed to be switchable between two operating modes, wherein the action of pressure force on the end section (R_{E}) to be sheared takes place in one operating mode with a position-controlled longitudinal position of the longitudinal stop (50), and in the other operating mode takes place in a force-controlled manner.

## Revendications

1. Procédé de cisaillement d'un tronçon d'extrémité (R_{E}) depuis un matériau en barre (R) au moyen d'une lame de coupe (30) mobile contre une lame fixe (10) transversalement à la direction longitudinale du matériau en barre, le tronçon d'extrémité à cisailler (R_{E}) étant mis en appui, du côté frontal, avec une butée longitudinale (50) et étant sollicité, pendant l'opération de cisaillement, par une force de pression (F_{D}) dans la direction longitudinale du matériau en barre (R) par l'intermédiaire de la butée longitudinale (50),
**caractérisé en ce que**
la sollicitation du tronçon d'extrémité (R_{E}) par la force de pression (F_{D}) pendant l'opération de cisaillement s'effectue avec régulation en position de la position longitudinale de la butée longitudinale (50).

2. Procédé selon la revendication 1,
**caractérisé en ce que**
la position longitudinale de la butée longitudinale (50) pendant l'opération de cisaillement est régulée à une valeur constante.

3. Procédé selon la revendication 1 ou 2,
**caractérisé en ce que**
l'on mesure l'évolution de la force de pression (F_{D}) exercée par la butée longitudinale (50) sur le tronçon d'extrémité (R_{E}) pendant l'opération de cisaillement.

4. Procédé selon la revendication 3,
**caractérisé en ce que**
on évalue l'évolution de la force de pression mesurée (F_{D}) pour apprécier la qualité de la surface cisaillée du tronçon d'extrémité (R_{E}).

5. Procédé selon l'une des revendications 1 à 4,
**caractérisé en ce que**
si la qualité de la surface cisaillée du tronçon d'extrémité (R_{E}) est insuffisante, on passe à un mode de fonctionnement dans lequel la sollicitation du tronçon d'extrémité à cisailler (R_{E}) par la force de pression (F_{D}) s'effectue de façon régulée en force, la force de pression (F_{D}) exercée par la butée longitudinale (50) sur le tronçon d'extrémité à cisailler (R_{E}) étant régulée en fonction d'une grandeur de référence de force prédéterminée (F_{F}).

6. Procédé selon la revendication 4 ou 5,
**caractérisé en ce que**
la qualité de la surface cisaillée est appréciée comme insatisfaisante si l'évolution de la force de pression mesurée (F_{D}) avant la fin de l'opération de cisaillement présente un creux, l'évolution de la force de pression tombant à un minimum et remontant ensuite, sans tenir compte des variations en termes de régulation.

7. Procédé selon la revendication 6,
**caractérisé en ce que**
la qualité de la surface cisaillée est appréciée comme insatisfaisante si l'évolution de la force de pression mesurée (F_{D}) augmente depuis le minimum d'une différence (ΔF) qui est d'au moins 10%, de préférence de 15 % à 30 %, de la valeur maximale (Fₘₐₓ) de la force de pression mesurée (F_{D}).

8. Procédé selon la revendication 6 ou 7,
**caractérisé en ce que**
la qualité de la surface cisaillée est appréciée comme insuffisante si l'évolution de la force de pression mesurée (F_{D}) avant la fin de l'opération de cisaillement diminue jusqu'à une valeur égale ou inférieure à zéro.

9. Dispositif pour mettre en œuvre le procédé de cisaillement d'un tronçon d'extrémité (R_{E}) depuis un matériau en barre (R) selon l'une des revendications 1 à 8, comprenant une lame fixe (10), une lame de coupe (30) entraînée de manière mobile contre la lame fixe (10) transversalement à la direction longitudinale du matériau en barre (R), une butée longitudinale (50) mobile dans la direction longitudinale pour le tronçon d'extrémité à cisailler (R_{E}) du matériau en barre (R), et un agencement hydraulique (81 - 84, 86 - 89) pour déplacer la butée longitudinale (50) et pour solliciter le tronçon d'extrémité (R_{E}) par une force de pression (F_{D}) dans la direction longitudinale du matériau en barre (R) par l'intermédiaire de la butée longitudinale (50) pendant l'opération de cisaillement,
**caractérisé en ce que**
il comprend un ensemble de mesure de position (70) pour détecter la position longitudinale de la butée longitudinale (50) et un régulateur (90) qui est conçu pour commander l'agencement hydraulique (81 - 84, 86 - 89) en se basant sur la position longitudinale de la butée longitudinale (50) détectée par l'ensemble de mesure de position (70), la position longitudinale de la butée longitudinale (50) pouvant être réglée par le régulateur (90) par l'intermédiaire de l'agencement hydraulique commandé par celui-ci, en fonction d'une grandeur de référence de position prédéterminée (x_{F}).

10. Dispositif selon la revendication 9,
**caractérisé en ce que**
le régulateur (90) est conçu pour réguler la position longitudinale de la butée longitudinale (50) à une valeur constante pendant l'opération de cisaillement.

11. Dispositif selon la revendication 9 ou 10,
**caractérisé en ce que**
l'agencement hydraulique (81 - 84, 86 - 89) présente une servovalve (84) réglable en continu par le régulateur (90).

12. Dispositif selon l'une des revendications 9 à 11,
**caractérisé en ce que**
il comprend un ensemble de mesure (92, 93, 94) pour mesurer la force de pression (F_{D}) exercée par la butée longitudinale (50) sur le tronçon d'extrémité à cisailler (R_{E}).

13. Dispositif selon la revendication 12,
**caractérisé en ce que**
il comprend un piston de butée (62) qui est relié par voie cinématique à la butée longitudinale (50) et qui peut être entraîné par l'agencement hydraulique (81 - 84, 86 - 89) par sollicitation avec un fluide de pression hydraulique, et **en ce que** l'ensemble de mesure (92, 93, 94) comprend des capteurs de pression (92, 93) pour détecter les pressions du fluide de pression hydraulique de part et d'autre du piston de butée (62).

14. Dispositif selon l'une des revendications 9 à 13,
**caractérisé en ce que**
le régulateur (90) est conçu de manière à permettre de réguler la force de pression (F_{D}) exercée par la butée longitudinale (50) sur le tronçon d'extrémité à cisailler (R_{E}) par l'intermédiaire de l'agencement hydraulique (81 - 84, 86 - 89) en fonction d'une grandeur de référence de force prédéterminée (F_{F}).

15. Dispositif selon la revendication 14,
**caractérisé en ce que**
il est réalisé de manière à pouvoir être commuté entre deux modes de fonctionnement, la sollicitation du tronçon d'extrémité à cisailler (R_{E}) par la force de pression s'effectuant avec régulation en position de la position longitudinale de la butée longitudinale (50), dans l'un des modes de fonctionnement, et avec régulation en force, dans l'autre mode de fonctionnement.
